# EUROPEAN PATENT APPLICATION

(11) **EP 4 801 023 A1**
(43) Date of publication of application: **02.09.2026**
(21) Application number: 26159971.6
(22) Date of filing: 23.02.2026
(51) Int. Cl.: H04N 1/00

(54) **INFORMATION PROCESSING APPARATUS AND DISPLAY METHOD**

(30) Priority: 28.02.2025 JP 2025031251
(71) Applicant: SHARP Kabushiki Kaisha, Sakai-City, Osaka 590-8522 (JP)
(72) Inventor: KONISHI, Toshiyuki, Osaka, 590-8522 (JP)
(74) Representative: Müller Hoffmann & Partner

(57) **Abstract**

An information processing apparatus includes a near field communicator that communicates with a terminal device, a display that displays a guide screen guiding the terminal device to external content, and one or more controllers, in which the one or more controllers display the guide screen including a first guidance display displaying guidance for using the near field communicator as a guide that guides the terminal device to the external content, and a first switching display switching the external content.

## Description

### BACKGROUND OF THE INVENTION

### Field of the Invention

The present disclosure relates to an information processing apparatus and the like. The present application is based on Japanese Patent Application No. 2025-031251 filed on February 28, 2025, and the contents thereof are included in the present application.

### Description of the Background Art

For example, as in Patent Document 1, an image forming apparatus that displays an instruction manual and frequently asked questions (FAQ) by connecting a mobile terminal device to a support server via a near field communication (NFC) tag provided in the image forming apparatus or a two dimensional code displayed on the image forming apparatus has been disclosed.

### PRIOR ART DOCUMENT

### PATENT DOCUMENT

Patent Document 1: Japanese Unexamined Patent Publication No. 2020-072352

### SUMMARY OF THE INVENTION

An object of the present disclosure is to provide, for example, an information processing apparatus and the like capable of appropriately guiding a user to external content.

According to an embodiment of the present disclosure, there is provided an information processing apparatus including: a near field communicator that communicates with a terminal device; a display that displays a guide screen guiding the terminal device to external content; and one or more controllers, in which the one or more controllers display the guide screen including a first guidance display displaying guidance for using the near field communicator as a guide that guides the terminal device to the external content, and a first switching display switching the external content.

According to an embodiment of the present disclosure, there is provided a display method including: displaying, on a guide screen guiding a terminal device to external content, a first guidance display indicating that communicating with the terminal device by use of a near field communication as a guide guiding to the external content, and a first switching display switching the external content.

The present disclosure can provide an information processing apparatus and the like that can appropriately guide a user to external content, for example.

### BRIEF DESCRIPTION OF THE DRAWINGS

FIG. 1 is a diagram illustrating an overview of a device according to a first embodiment.
FIG. 2 is a diagram illustrating a configuration of hardware of the device according to the first embodiment.
FIG. 3A is a diagram illustrating an example of a software configuration of the device according to the first embodiment.
FIG. 3B is a diagram illustrating an example of external content information according to the first embodiment.
FIG. 4 is a diagram showing a flow of main processing in the first embodiment.
FIG. 5 is a diagram showing a flow of NFC guide screen display processing in the first embodiment.
FIG. 6A is a diagram illustrating an example of an operation according to the first embodiment.
FIG. 6B is a diagram illustrating an example of an operation according to the first embodiment.
FIG. 6C is a diagram illustrating an example of an operation according to the first embodiment.
FIG. 7 is a diagram illustrating a flow of main processing in a second embodiment.
FIG. 8 is a diagram illustrating an example of an operation according to a second embodiment.
FIG. 9 is a diagram illustrating a software configuration of a device according to the third embodiment.
FIG. 10 is a diagram illustrating a flow of main processing in the third embodiment.
FIG. 11 is a diagram illustrating a flow of NFC guide screen display processing in the third embodiment.
FIG. 12A is a diagram illustrating an example of an operation according to the third embodiment.
FIG. 12B is a diagram illustrating an example of an operation according to the third embodiment.
FIG. 13A is a diagram illustrating an example of a software configuration of a device according to a fourth embodiment.
FIG. 13B is a diagram illustrating an example of setting information according to the fourth embodiment.
FIG. 14 is a diagram illustrating a flow of main processing according to the fourth embodiment.
FIG. 15 is a diagram illustrating a flow of NFC guide screen display processing according to the fourth embodiment.
FIG. 16 is a diagram illustrating a flow of display setting processing according to the fourth embodiment.
FIG. 17A is a diagram illustrating an example of an operation according to the fourth embodiment.
FIG. 17B is a diagram illustrating an example of an operation according to the fourth embodiment.

### DESCRIPTION OF THE PREFERRED EMBODIMENTS

For example, when a user wants to display an instruction manual, if an information processing apparatus does not store the data of the instruction manual, it is necessary to cause a terminal device of the user to access a latest instruction manual on the network and display the instruction manual. Here, as a method of acquiring a uniform resource locator (URL) for the user to access an external site for browsing the instruction manual on the terminal device, there is known a method of reading a two dimensional code displayed on the information processing apparatus, acquiring the URL from the two dimensional code, and accessing the external site of the instruction manual.

In this method, the user needs to start a two dimensional code reading application (for example, a camera application) and read, with the terminal device, the two dimensional code displayed on the information processing apparatus. At this time, the user needs to appropriately adjust the focus of the camera application to read the two dimensional code.

However, when brightness of a screen on which the two dimensional code is displayed is low, the camera application is more likely to fail to read the two dimensional code. A problem with this case is that it takes time and effort for the user to retry the reading of the two dimensional code by the camera application after adjusting brightness of the display screen of the information processing apparatus.

On the other hand, a method using NFC is known as a method for the terminal device to acquire the URL for accessing the external site. However, when the user cannot read the two dimensional code with the reading application, it is necessary to cancel the reading of the two dimensional code in order to acquire the URL using NFC instead of the two dimensional code. For this reason, there is a problem in that the user needs to cancel the display screen on which the two dimensional code displayed by the information processing apparatus is displayed, and redisplay, on the terminal device, the display screen for acquiring the URL from an NFC device.

Further, in addition to the instruction manual (user's manual), a plurality of pieces of content such as frequently asked questions may be prepared in the information processing apparatus. It is also possible to prepare such a plurality of pieces of content, for example, external content for the user's manual and external content for frequently asked questions on a network such as an external site.

However, only one URL for the terminal device to access the external content can be set in the NFC device. Therefore, there is a problem in that in a case where a plurality of pieces of external content is prepared, if the user cannot access desired external content, the access to the external content is temporarily cancelled and the operation is performed again, for example, which makes the operation complicated.

An information processing apparatus that solves such problems will be described below in the following embodiments with reference to the drawings. It is noted that the following embodiments are merely examples of the disclosure described in the claims, and the technical scope of the present disclosure is not limited to the description of the following embodiments.

### 1. First Embodiment

A first embodiment will be described below. In the first embodiment, the following will be described for an example. In the following embodiments, a case will be described in which the information processing apparatus of the present disclosure is applied to an image forming apparatus, but may also be applied to other information processing apparatuses. The information processing apparatus may be, for example, a display device such as a television, a display, or an electronic blackboard, or may be a home appliance such as an air conditioner, a vacuum cleaner, or a refrigerator. In addition, the information processing apparatus can also be applied to information processing apparatuses such as a car navigation system and a game machine, and information processing apparatuses such as a vending machine, an automatic ticket machine, and an automatic teller machine.

### 1. 1 Overall Configuration

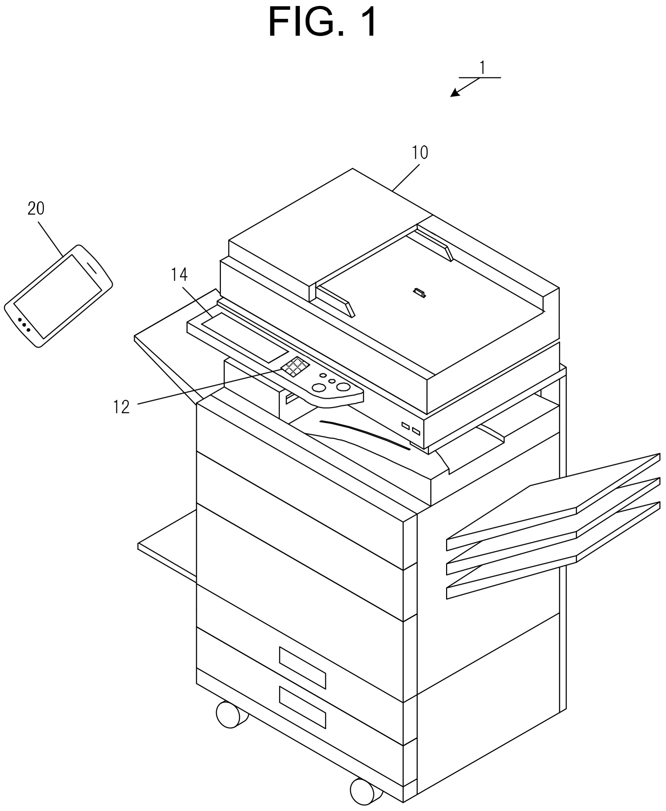

FIG. 1 is a diagram illustrating an overview of a system 1 including an image forming apparatus 10 and a terminal device 20.

The image forming apparatus 10 is a device referred to as a multifunction machine or a multifunction peripheral/printer (MFP), for example. For example, when executing a job (a print job), the image forming apparatus 10 may form an image on a sheet, that is, a recording medium. The image forming apparatus 10 is capable of executing a plurality of functions including a copy function, a FAX function, a scan function, and a printer function as a job to be executed. Further, the image forming apparatus 10 can transmit and receive data to and from an external device such as a terminal device by near field communication.

The terminal device 20 includes, for example, an NFC communicator capable of near field communication. The terminal device 20 can receive data from the image forming apparatus 10 by holding the NFC communicator over an NFC communicator 12 of the image forming apparatus 10. Further, the terminal device 20 includes an image capturing unit. The terminal device 20 can acquire data by capturing an image of the two dimensional code displayed on the display 14 of the image forming apparatus 10 with the image capturing unit.

### 1. 2 Hardware Configuration

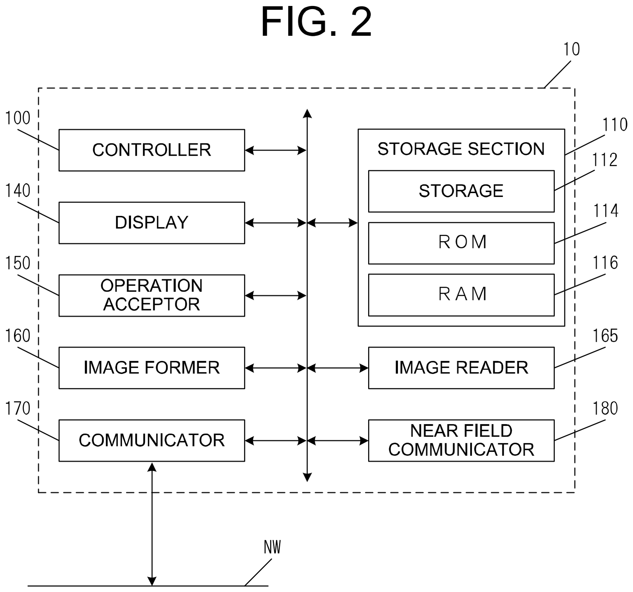

A hardware configuration of the image forming apparatus 10 will be described with reference to the drawings below. FIG. 2 is a diagram illustrating an example of a hardware configuration of the image forming apparatus 10. In addition, the image forming apparatus 10 has general functions as necessary.

As illustrated in FIG. 2, the image forming apparatus 10 includes a controller 100, a storage 112 as a storage device (storage section 110), a read only memory (ROM) 114 and a random access memory (RAM) 116, a display 140, an operation acceptor 150, an image former 160, an image reader 165, a communicator 170, and a near field communicator 180.

The controller 100 controls the entire image forming apparatus 10. The controller 100 reads and executes various programs stored in the storage section 110 (including the storage 112 and the ROM 114) so as to realize various functions. The controller 100 may be realized by, for example, one or more control devices/computing devices (e.g., a central processing unit (CPU) or a system on a chip (SoC)). The controller 100 may include one or more control circuits.

The storage section 110 is one or more storage devices that store various programs and various types of data necessary for operation of the image forming apparatus 10. The storage section 110 includes, for example, the storage 112, ROM 114, RAM 116, and the like.

The storage 112 is a non-volatile storage device capable of storing programs and data. For example, the storage section 110 may include one or more storage devices such as a hard disk drive (HDD) or a solid state drive (SSD). The storage 112 may be configured as an external device such as a USB memory connectable to the image forming apparatus 10. Furthermore, the storage 112 may be, for example, a storage region on a cloud.

The ROM 114 is one or more non-volatile memories capable of retaining programs and data even when power is turned off.

The RAM 116 is a main memory mainly used when the controller 100 executes processing. The RAM 116 is one or more rewritable memories that temporarily stores programs read from the storage 112 or the ROM 114 and data including results of execution.

The display 140 is a display device capable of displaying various pieces of information and various screens such as an execution screen. The display 140 may be, for example, a display device, such as a liquid crystal display (LCD), an organic electro luminescence (EL) display, or an electrophoretic display. Furthermore, the display 140 includes an interface to which a display device is connectable. For example, the display may be configured by an external display device connected via a high-definition multimedia interface (HDMI) (registered trademark), a digital visual interface (DVI), or a display port. For example, the display 140 is the display 14 of FIG. 1.

The operation acceptor 150 is an operation device capable of receiving an input operation from a user. For example, a software key displayed on a touch panel integrated with the display 140 or a hardware key such as an operation button may be used. The operation acceptor 150 may be an operation device such as a keyboard or a mouse. Moreover, the operation acceptor 150 may include an interface (e.g., USB) to which an operation device is connectable. For example, the image forming apparatus 10 may be connected to a different operation device (a keyboard, a mouse, and the like) via an interface.

The image former 160 forms an image, for example, on recording paper. The image former 160, for example, includes an image carrier, forms a toner image on the image carrier, and transfers the image on the image carrier onto the recording paper, thereby forming an image. The image former 160 may be configured as an image forming apparatus, such as a printer. Furthermore, the image former 160 may electronically form an image as an image file.

The image reader 165 reads a document (image) to be output as image data. The image reader 165 is, for example, a scanner, and may be a reading device using a charge coupled device (CCD), a contact image sensor (CIS), or a complementary metal-oxide-semiconductor (CMOS) image sensor.

The communicator 170 is a communication interface that communicates with other devices. For example, the communicator 170 may be a network interface capable of providing a wired connection or a wireless connection. In the present embodiment, communication with other devices is possible via a network (NW).

The network (NW) that connects the image forming apparatus 10 may be any communication line or communication system, and may use, for example, a communication system such as a wired or wireless local area network (LAN), a virtual local area network (VLAN), the Internet, a public line network, a mobile communication (for example, a mobile communication such as 4G/5G/6G), and a next-generation telephone network.

The near field communicator 180 is an interface that performs data communication with various external devices capable of using NFC. The near field communicator 180 may communicate with various external devices by using, for example, an NFC tag. The near field communicator 180 may include a storage separately from the storage section 110. For example, the near field communicator 180 is the NFC communicator 12 of FIG. 1. In the present embodiment, the near field communicator uses the NFC tag. However, the near field communicator may use another RF tag such as a UHF tag or Bluetooth (registered trademark) as long as the near field communicator can communicate with various external devices via a short-range radio frequency.

The terminal device 20 may include a controller, a storage, a display, an operation acceptor, an image capturing unit, a near field communicator, and a communicator as necessary. Since each configuration is substantially the same as the configuration of the image forming apparatus 10, description thereof will be omitted. Note that the image capturing unit is configured by, for example, a camera device.

### 1. 3 Software Configuration

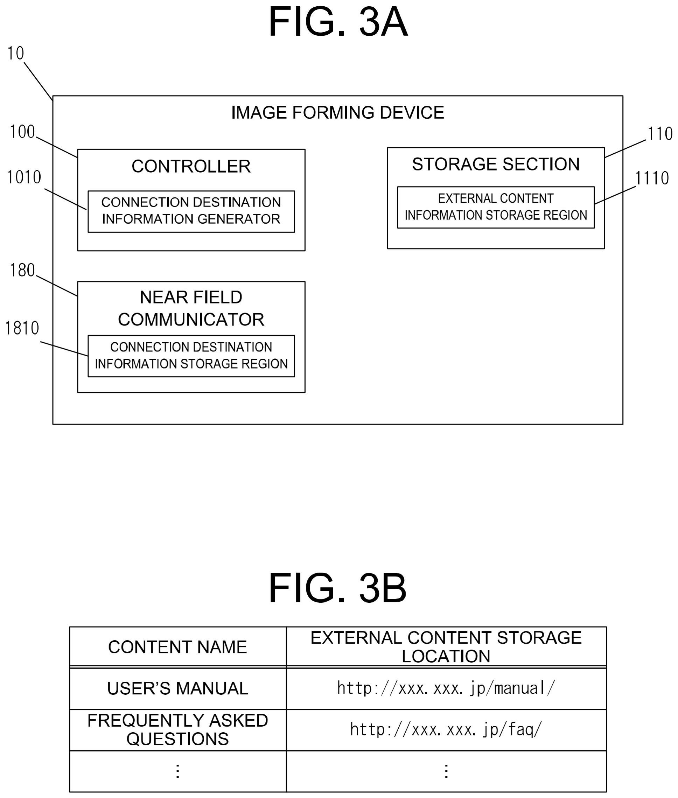

A main configuration of software in the image forming apparatus 10 included in the present disclosure will be described with reference to FIG. 3A. It is noted that the software configuration illustrated in FIG. 3A mainly describes a configuration required in the present embodiment, and other configurations are omitted.

For example, the controller 100 reads and executes a program stored in the storage section 110 (storage 112, ROM 114).

The controller 100 may function as a connection destination information generator 1010 by reading and executing a program stored in the storage section 110. For example, when external content is selected, connection destination information generator 1010 generates corresponding connection destination information.

Further, the storage section 110 secures an external content information storage region 1110 for storing external content information. The external content information is information related to external content of the image forming apparatus 10, and may be a manual of the image forming apparatus 10 in the present embodiment. In addition, the manual is a manual such as an instruction manual, an operation manual, or an installation manual, which is referred to when a user or an administrator performs an operation or performs setting. The manual may be constructed by an electronic file such as Portable Document Format (PDF), EPUB, or Hyper Text Markup Language (HTML), or may be constructed on the site.

The external content according to the present embodiment refers to content that is not stored in the image forming apparatus 10. In other words, the external content refers to external content stored "outside" the image forming apparatus 10. In the present embodiment, when the term "content" is simply used, the "content" means external content.

Here, an example of the external content information stored in the external content information storage region 1110 will be described with reference to FIG. 3B. The external content information stores a content name (for example, "user's manual") for identifying the external content, and an external content storage location (for example, "http://xxx.xxx.jp/manual/") where the external content is stored. The external content storage location is a location serving as a base in which the external content is stored, and a URL may be stored, or an IP address may be stored, for example.

The near field communicator 180 includes a connection destination information storage region 1810 that stores connection destination information. The connection destination information is information that can be acquired by the terminal device 20 through near field communication via the near field communicator 180. On the basis of the acquired connection destination information, the terminal device 20 makes a connection to a connection destination from which the external content is acquired.

In the connection destination information, a URL for the terminal device 20 to connect to external content on an external site may be stored. Note that the connection destination information stored in the connection destination information storage region 1810 may be the same information as the connection destination information stored in the external content information storage region 1110, or information to which a query parameter is added may be stored.

Here, the connection destination information generator 1010 generates the connection destination information based on the external content storage location. Here, as a method in which the connection destination information generator 1010 generates the connection destination information, for example, the following methods are considered.
(1) The connection destination information generator 1010 reads the external content storage location and generates same as the connection destination information. In this case, the external content storage location stored in the external content information storage region 1110 matches the connection destination information.
(2) The connection destination information generator 1010 reads the external content storage location, and generates connection destination information by adding model information (for example, a device name of the image forming apparatus 10, a software version, a model series, an option state, or the like) as a query parameter to the external content storage location. In this way, for example, it is possible to display information of a manual for each model of the image forming apparatus 10.
(3) The connection destination information generator 1010 reads the external content storage location, and generates connection destination information by adding error content (for example, out of toner, paper jam, or the like) or a user operation (for example, a term that the user wants to know, or the like) as a query parameter to the external content storage location. In this way, for example, when an error occurs in the image forming apparatus 10, information on a manual corresponding to the error can be displayed.
(4) The connection destination information generator 1010 generates, for example, a character string including model information, error content, and the like as new connection destination information based on the external content storage location. In this way, for example, the connection destination information can be indicated by a static URL (location) instead of a URL to which information is added in a query format.

### 1. 4 Processing flows

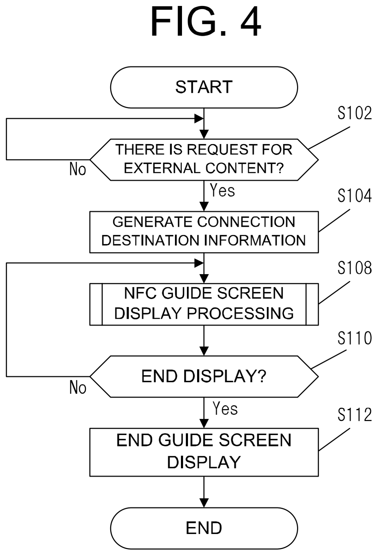

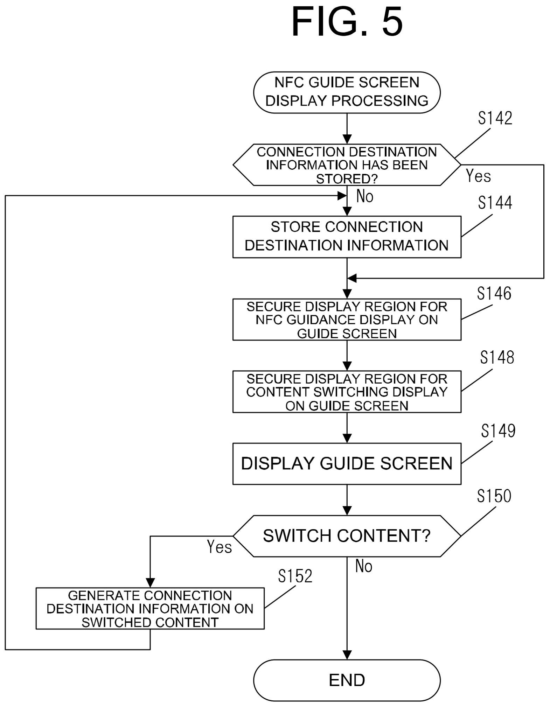

Processing flows in the present embodiment will be described below with reference to FIG. 4 and FIG. 5. FIG. 4 is a diagram showing a flow of main processing, and FIG. 5 is a diagram showing a flow of NFC guide screen display processing.

### 1. 4. 1 Flow of main processing

First, the controller 100 determines whether or not there is a request for external content (S102). As a method of determining whether or not there is a request for external content, the following methods are considered.

A first method is a method of determining that the user has performed an operation of giving an instruction to display external content on a home screen.

A second method is a method of determining that the user has performed an operation of giving an instruction to display external content on a display screen (for example, an error screen) other than the home screen.

When it is determined that there is a request for the external content, the controller 100 generates connection destination information corresponding to the external content (S102; Yes → S104).

On the other hand, in a case where it is determined that there is no request for the external content, the controller 100 repeats the determination of S102 until it is determined that there is a request (S102; No).

Next, the controller 100 executes NFC guide screen display processing (S108). The NFC guide screen display process is processing for displaying a near field communication (NFC) guide screen in a case where the guide that guides the user to the external content is communication via NFC between the near field communicator 180 and the terminal device.

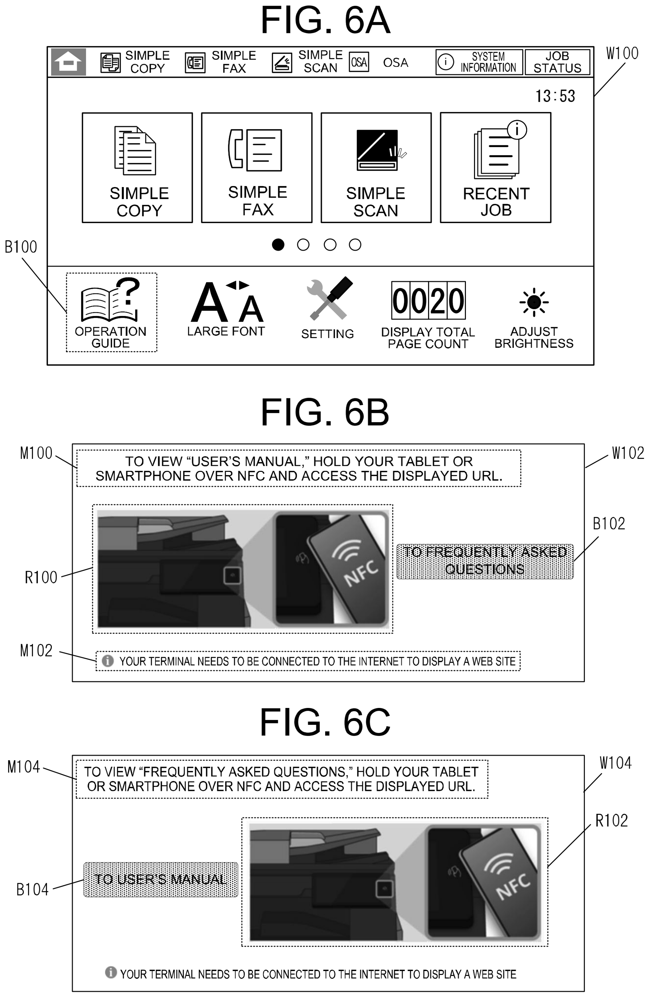

Here, the guide screen is a display screen including a guide display (guidance display) related to display of external content using the terminal device 20, as illustrated in FIG. 6B and FIG. 6C described later. The guide screen includes one or a plurality of messages, and may also include switching display.

One or a plurality of messages is displayed on the guide screen, and the guidance display and the switching display are displayed by securing a displayable region. Note that displaying the guide screen includes, in addition to actually displaying the guide screen, securing a region in the guide screen in which the guidance display and the switching display can be displayed while the guide screen is being displayed. For example, in the present embodiment, while a guide screen to be described later is being displayed, the guidance display and the switching display may be displayed on the guide screen at a timing when a region in which the guidance display and the switching display can be displayed is secured on the guide screen. The NFC guide screen display processing will be described later.

The controller 100 determines whether or not to end the display of the guide screen (S110). When it is determined not to end the display of the guide screen, the NFC guide screen display processing is executed (S110; No → S108). On the other hand, when the controller 100 determines to end the display of the guide screen, the controller 100 ends the display of the guide screen (S110; Yes → S112).

When the display of the guide screen is ended, the controller 100 may delete the connection destination information if the connection destination information is stored in the connection destination information storage region 1810.

### 1. 4. 2 Flow of NFC guide screen display processing

The NFC guide screen display processing will be described with reference to FIG. 5. The controller 100 determines whether or not the connection destination information has been stored in the connection destination information storage region 1810 (S142). When the connection destination information has not been stored in the connection destination information storage region 1810, the controller 100 stores the connection destination information in the connection destination information storage region 1810 (S142; No → S144).

Next, the controller 100 secures a display region for NFC guidance display as a first guidance display on the guide screen (S146). Further, even in a case where the connection destination information has already been stored in the connection destination information storage region 1810, the controller 100 secures the display region for the NFC guidance display as the first guidance display on the guide screen (S142; Yes → S146).

For example, the NFC guidance display may be a guide display that prompts the user to perform an operation of holding the terminal device over the near field communicator 180.

Subsequently, the controller 100 secures a display region for content switching display as a switching display on the guide screen (S148).

Here, for example, the content switching display displayed in the secured display region for the content switching display may be displayed by an icon, may be a select box displaying options, or may be display explaining a key operation for switching.

The term "icon" as used herein means various types of data or processing functions displayed on the display screen in the form of, for example, a picture, a pictogram, a symbol, or a character. When the user selects an icon, the controller 100 can execute processing set for the icon.

Further, the controller 100 may sequentially display different external content on the guide screen every time the external content is switched, or may display an external content switching button or the like and switch the external content of the switching destination displayed on the guide screen every time the switching button is selected by the user.

Subsequently, the controller 100 displays, on the display 140, the guide screen in which a region capable of displaying the guidance display and the switching display is secured (S149).

Next, the controller 100 determines whether or not the external content is switched (S150). For example, when the content switching display is selected by the user, it may be determined that the content is switched.

When it is determined that the content is switched, the controller 100 generates the connection destination information on the switched external content (S150; Yes → S152). Then, the controller 100 stores the generated connection destination information, secures the display region for the NFC guidance display as the first guidance display on the guide screen, secures the display region for the content switching display as the switching display on the guide screen, and redisplays the guidance display and the guide screen on which the switching display is updated (S152 → S144 → S146 → S148 → S149). In a case where it is determined that the content is not switched, the controller 100 ends the NFC guide screen display processing (S150; No).

### 1. 5 Operation example

FIG. 6A, FIG. 6B, and FIG. 6C are diagrams each illustrating an example of an operation of the image forming apparatus 10 in the present embodiment. FIG. 6A, FIG. 6B, and FIG. 6C are diagrams each illustrating an example of the display screen displayed on the display 140 of the image forming apparatus 10 when there are a "user's manual" as the first external content and "frequently asked questions" as the second external content.

FIG. 6A is a diagram illustrating the operation of the home screen of the image forming apparatus 10, and FIG. 6B and FIG. 6C are diagrams illustrating the operation of the guide screen displayed on the display 140 of the image forming apparatus 10.

On a display screen W100 of FIG. 6A, buttons for executing various functions and a display button B100 for instructing display of the first external content are displayed as the home screen of the image forming apparatus 10. Here, when the display button B100 is selected, the controller 100 displays a display screen W102 of FIG. 6B on the display 140.

On the display screen W102 of FIG. 6B, a message M100 indicating that "to view "user's manual," hold your tablet or smartphone over NFC and access the displayed URL" is displayed. Further, on the display screen W102, a warning message M102 indicating that "your terminal needs to be connected to the Internet to display a WEB site" and a display button B102 are displayed as the switching display for switching to the second external content.

Further, on the display screen W102, an NFC guidance display R100 is displayed as the first guidance display.

Here, when the user holds the terminal device 20 over the NFC communicator 12 in accordance with the content displayed by the NFC guidance display, the terminal device 20 receives the connection destination information on the first external content via NFC. In addition, the controller 100 ends the display of the guide screen, and displays, for example, the display screen W100 of FIG. 6A as the home screen.

On the other hand, when the user selects the display button B102 for switching to the second external content which is the switching display, the controller 100 causes the display screen W102 of FIG. 6B to transition to the display screen W104 of FIG. 6C.

On the display screen W104 of FIG. 6C, a message M104 indicating that "to view "frequently asked questions," hold your tablet or smartphone over NFC and access the displayed URL" is displayed. On the display screen W104, NFC guidance display R102 is displayed as the first guidance display, and a display button B104 for receiving an instruction to switch the external content to the first external content is displayed as the switching display.

At this time, when the user holds the terminal device 20 over the NFC communicator 12, the terminal device 20 receives the connection destination information on the second external content.

### 1. 6 Effects and the like

According to the present embodiment, it is possible to appropriately guide the user to the external content. For example, in a case where the terminal device is caused to read connection destination information for connecting to a plurality of pieces of external content through near field communication via NFC, the user can easily switch the external content.

Further, the switching display of the plurality of pieces of external content can be displayed on the guide screen. In this case, only one piece of connection destination information (URL in the present embodiment) can be stored in the connection destination information storage region 1810. Even when two pieces of external content such as a user's manual page and a frequently used question page are prepared on external sites and the connection destination information received by the terminal device 20 needs to be switched, the user can easily switch the external content without canceling the operation on the guide screen. As described above, according to the present embodiment, appropriate connection destination information can be set to the NFC on the external content guide screen. In addition, appropriate guidance display is performed on each guide screen, and the user can perform an appropriate operation.

### 2. Second embodiment

A second embodiment will be described below. The second embodiment is an embodiment in which an external content selection screen can be displayed before a guide screen is displayed.

In the second embodiment, the description will be omitted for the components with the same hardware and software configuration as the first embodiment, and the description will focus on the points different from the first embodiment.

### 2. 1 Processing flows

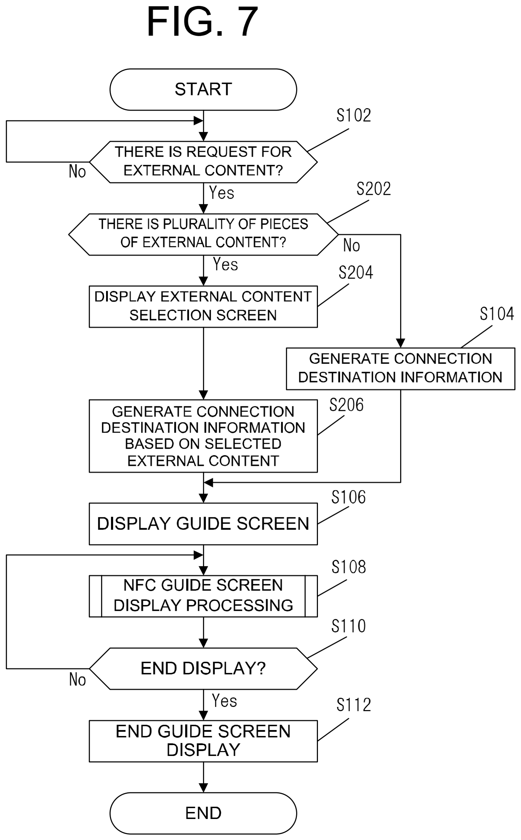

Processing flows in the present embodiment will be described below. FIG. 7 is a diagram illustrating a flow of main processing. FIG. 7 replaces FIG. 4 of the first embodiment, in which steps S202 to S206 are executed between the steps S102 and S106.

First, when the controller 100 determines that there is a request for an external content, the controller 100 determines whether or not there is a plurality of pieces of external content (S102; Yes → S202). When the controller 100 determines that there is a plurality of pieces of external content, the controller 100 displays an external content selection screen on the display 140 (S202; Yes → S204).

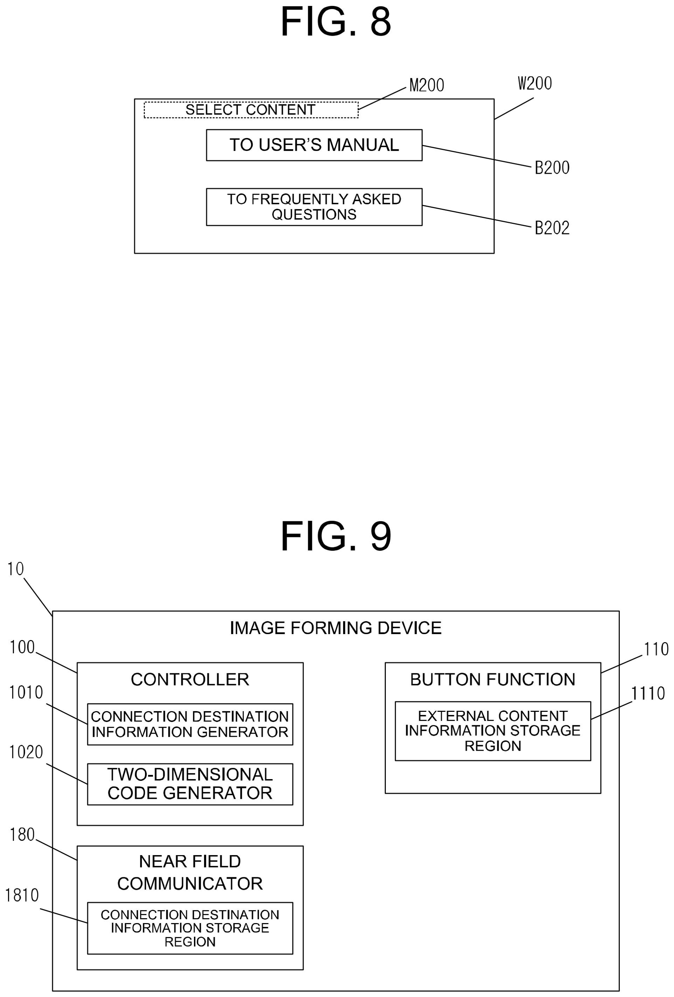

The external content selection screen herein refers to a display screen on which a list of external content to which the user is guided is displayed on the guide screen as illustrated in FIG. 8 to be described later.

Subsequently, the controller 100 generates connection destination information based on the external content selected by the user from the external content selection screen (S206). On the other hand, when there is one piece of external content (it is determined that there are not multiple pieces of external content), the controller 100 generates connection destination information corresponding to the external content (S202; No → S104).

### 2. 2. Operation example

FIG. 8 is a diagram illustrating an example of an operation of the image forming apparatus 10. FIG. 8 is a diagram illustrating an example of a display screen displayed on the display 140 of the image forming apparatus 10 when there is a plurality of pieces of external content, for example, when there are "user's manual" as the first external content and "frequently asked questions" as the second external content.

On a display screen W200 of FIG. 8, a message M200 indicating "select content," a display button B200 as switching display for switching to the first external content, and a display button B202 as switching display for switching to the second external content are displayed as a list. Here, when the user selects the display button B200, the controller 100 displays the display screen W102 on the display 140 as a guide screen to the "user's manual" of FIG. 6B. On the other hand, when the user selects the display button B202, the controller 100 displays a display screen W104 on the display 140 as a guide screen to "frequently asked questions" of FIG. 6C.

As described above, when a plurality of pieces of external content is accessed via the NFC, the content selection screen may be displayed before the guide screen is displayed. The user can display the guide screen of the external content desired by the user by selecting the external content desired by the user from the list display displayed on the selection screen. It is possible to appropriately guide the user to external content without requiring the user to switch the display screen.

### 3. Third embodiment

A third embodiment will be described below. The third embodiment is an embodiment in which the NFC guidance display and a two dimensional code can be switched and displayed by a guide.

In the third embodiment, the description will be omitted for the components with the same hardware and software configuration as the first embodiment, and the description will focus on the points different from the first embodiment.

### 3. 1 Software configuration

FIG. 9 is a diagram illustrating a configuration of main software of the image forming apparatus 10 in the present embodiment. For example, the controller 100 can further realize a two dimensional code generator 1020 by reading and executing a program stored in the storage section 110 (storage 112, ROM 114).

Two dimensional code generator 1020 generates a two dimensional code based on the connection destination information as encoded information, for example.

The encoded information herein may be a figure or a character string (here, the character string is a character string of one or more characters; and the character includes one or more of a number, alphabet, kana character, hiragana character, kanji character, symbol, and the like). When the encoded information is a figure, the encoded information may be a one dimensional code such as a bar code (e.g., an EAN code, JAN code, Codabar, or CODE 128), or a two dimensional code. The two dimensional code may be a stacked two dimensional code (e.g., PDF 417 or CODE 49), or a matrix two dimensional code (e.g., a quick response code (QR Code (registered trademark)), Data Matrix, Veri Code, or Aztec). In the following, the third embodiment will be described using a quick response code (QR code) as an example.

### 3. 2 Processing flows

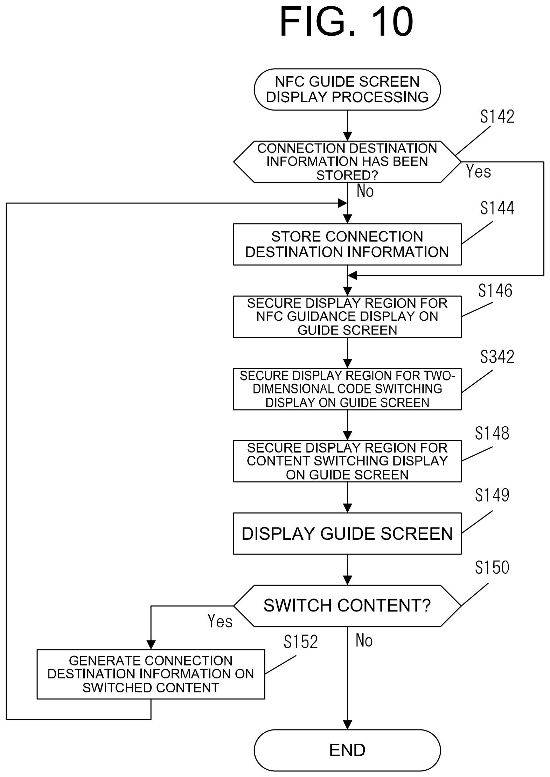

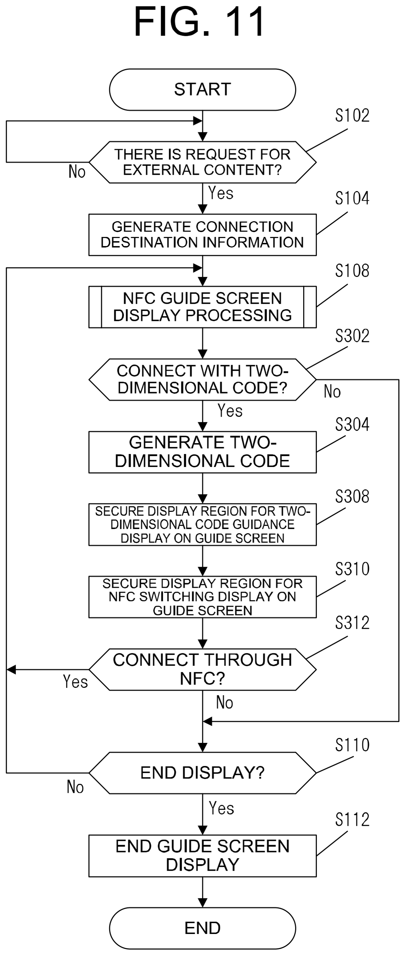

Processing flows in the present embodiment will be described below with reference to FIG. 10 and FIG. 11. FIG. 10 is a diagram illustrating a flow of NFC guide screen display processing, and FIG. 11 is a diagram illustrating a flow of main processing.

### 3. 2. 1 Flow of NFC guide screen display processing

FIG. 10 provides an addition to FIG. 5 of the first embodiment, in which a step S342 is executed between the steps S146 and S148.

First, the controller 100 secures a display region for two dimensional code switching display on the guide screen (S342). The two dimensional code switching display refers to display for switching the NFC guidance display displayed on the guide screen to two dimensional code guidance display as a second guidance display. For example, the two dimensional code switching display may be displayed by an icon or may be display indicating a switching operation method.

### 3. 2. 2 Flow of main processing

FIG. 11 provides an addition to FIG. 4 of the first embodiment, in which steps S302 to S312 are executed between the steps S108 and S110.

First, the controller 100 determines whether or not to connect with a two dimensional code (S302). For example, when the user selects the two dimensional code switching display, it may be determined that the connection is performed with the two dimensional code.

In a case where it is determined that the connection is performed with the two dimensional code, the controller 100 generates the two dimensional code based on the connection destination information (S302; Yes → S304). Note that the controller 100 may generate a plurality of two dimensional codes based on a plurality of pieces of connection destination information or may generate a two dimensional code including a plurality of pieces of connection destination information. Subsequently, the controller 100 secures a display region for the two dimensional code guidance display on the guide screen (S308).

For example, the two dimensional code guidance display may include guide display that displays at least the generated two dimensional code and prompts the user to perform an operation to read the two dimensional code with a camera application of the terminal device 20.

In the present embodiment, the controller 100 executes the NFC guide screen display processing S108, and displays the guide screen on the display 140. Here, the controller 100 deletes the display region for the NFC guidance display from the guide screen, and updates and displays the two dimensional code guidance display including the generated two dimensional code from the NFC guidance display.

Subsequently, the controller 100 secures a display region for the NFC switching display on the guide screen (S310). Here, the NFC switching display refers to display for switching from the guide screen including the two dimensional code guidance display to the guide screen including the NFC guidance display, and the NFC switching display may be displayed by an icon or may be display for explaining a key operation for switching, for example.

In the present embodiment, the controller 100 displays the two dimensional code switching display on the guide screen. Here, the controller 100 deletes the display region for the two dimensional code switching display from the guide screen, and updates and displays the NFC switching display from the two dimensional code switching display.

Next, the controller 100 determines whether or not to connect through NFC (S312). For example, when the user selects the NFC switching display, it may be determined that the connection is performed through NFC.

In a case where it is determined that the connection is performed through NFC, the controller 100 executes NFC guide screen display processing (S312; Yes → S108). On the other hand, in a case where it is determined not to connect through NFC (S312; No), and in a case where it is not to connect with a two dimensional code (S302; No), it is determined whether or not to end the display of the guide screen (S110).

It is noted that the above-described operational flow is an example, and partially different processing may be performed. In the present embodiment, for example, the NFC guide screen display processing in the step S108 is executed first to display the guide screen including the NFC guidance display, but the processing in the step S304 may be executed first to display the guide screen including the two dimensional code guidance display first.

### 3. 3 Operation example

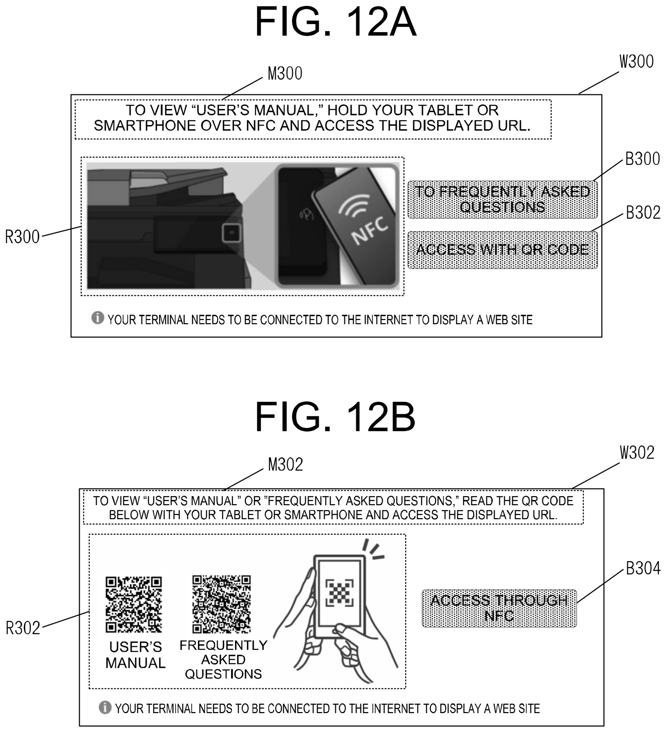

FIG. 12A and FIG. 12B are diagrams illustrating an example of an operation of the image forming apparatus 10 in the present embodiment. FIG. 12A is a diagram illustrating an operation of a guide screen including NFC guidance display displayed on the display 140 of the image forming apparatus 10. FIG. 12B is a diagram illustrating an operation of a guide screen including two dimensional code guidance display displayed on the display 140 of the image forming apparatus 10.

On a display screen W300 of FIG. 12A, a message M300 indicating that "to view "User's manual," hold your tablet or smartphone over NFC and access the displayed URL" is displayed. Further, on the display screen W300, NFC guidance display R300 is displayed as first guidance display. On the display screen W300, a display button B300 is displayed as a first switching display switching the external content to the second external content, and a display button B302 is displayed as a second switching display switching the guide to the first external content to the two dimensional code.

First, on the display screen W300, when the user holds the terminal device 20 of the user over the NFC communicator 12 in accordance with the notified guidance, the terminal device 20 receives the connection destination information on the first external content via NFC. In addition, the controller 100 ends the display of the guide screen, and displays, for example, the display screen W100 of FIG. 6A as the home screen.

Next, when the user selects the display button B300 on the display screen W300, the controller 100 causes the display screen W300 to transition to a guide screen for guiding the user to the second external content, for example. Further, when the display button B302 is selected on the display screen W300, the controller 100 causes the display screen W300 to transition to the display screen W302 of FIG. 12B.

On the display screen W302 of FIG. 12B, a message M302 indicating that "to view "User's manual" or "frequently asked questions," read the QR code below with your tablet or smartphone and access the displayed URL" is displayed. On the display screen W302, two dimensional code guidance display R302 and a display button B304 as second switching display switching the guide to the second external content to NFC are displayed.

In the two dimensional code guidance display R302, a QR code as a two dimensional code for accessing each of the first external content and the second external content, and guidance for reading the two dimensional code and displaying the external content are displayed. Although a plurality of QR codes is displayed as an example in the present embodiment, only one QR code for accessing a plurality of pieces of external content may be displayed.

First, when the user reads the QR code displayed on the display screen W302 with the terminal device 20, the connection destination information on the external content is read into the terminal device 20. Next, when the user selects the display button B304 on the display screen W302, the controller 100 causes the display screen W302 to transition to the display screen W300 of FIG. 12A.

### 3. 4 Effects and the like

According to the present embodiment, the user can access the external content by an easy-to-use method among NFC or a two dimensional code. When the two dimensional code is difficult to read, NFC can be used as a method for accessing external content. In the case of using NFC, the user can acquire a URL only by holding the terminal device 20 over an NFC reader (the NFC communicator 12) without performing troublesome operations such as focus adjustment and screen brightness adjustment for reading a two dimensional code, and can easily switch and access the external content.

### 4. Fourth embodiment

A fourth embodiment will be described below. The fourth embodiment is an embodiment in which the user can set the guide screen display method in advance.

In the fourth embodiment, the description will be omitted for the components with the same hardware and software configuration as the first embodiment and the third embodiment, and the description will focus on the points different from the first embodiment.

### 4. 1 Software configuration

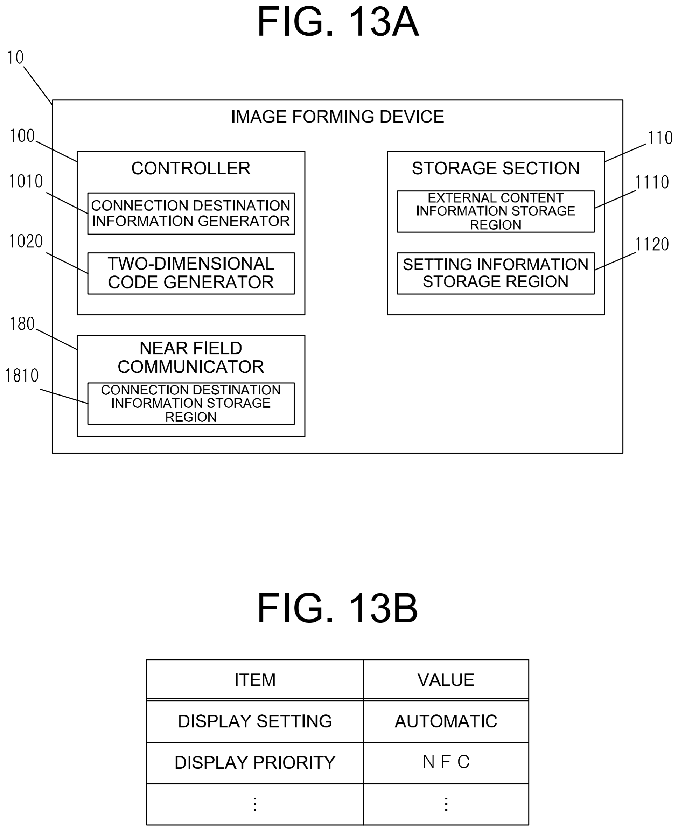

FIG. 13A and FIG. 13B are diagrams illustrating a configuration of main software of the image forming apparatus 10 in the present embodiment.

The storage section 110 secures a setting information storage region 1120 for storing setting information. The setting information herein is information on settings related to the display of the guide screen of the image forming apparatus 10. An example of the setting information stored in the setting information storage region 1120 will now be described with reference to FIG. 13B. The setting information stores a setting item (for example, "display setting") displayed on the guide screen and a value of the setting item (for example, "automatic").

Here, items may include at least a display setting as a first setting, for example. The display setting is an item for setting an operation of displaying the guide screen of the image forming apparatus 10. As the value of the display setting, for example, "NFC" and "QR code," and "automatic" as necessary may be stored. Here, the value of "NFC" means a setting for displaying the guide screen by fixing the guide to NFC, and the value of "QR code" means a setting for displaying the guide screen by fixing the guide to the two dimensional code. On the other hand, "automatic" means a setting for displaying the second switching display on the guide screen.

Further, the items may include display priority as a second setting. The display priority is enabled when "automatic" is stored in the display setting. As the value of the display priority, for example, "NFC" and "QR code" may be stored. Here, "NFC" as the value of the display priority means a setting for displaying the guide screen with priority given to the guide to NFC, and the value of "QR code" means a setting for displaying the guide screen with priority given to the guide to a two dimensional code.

### 4. 2 Processing flows

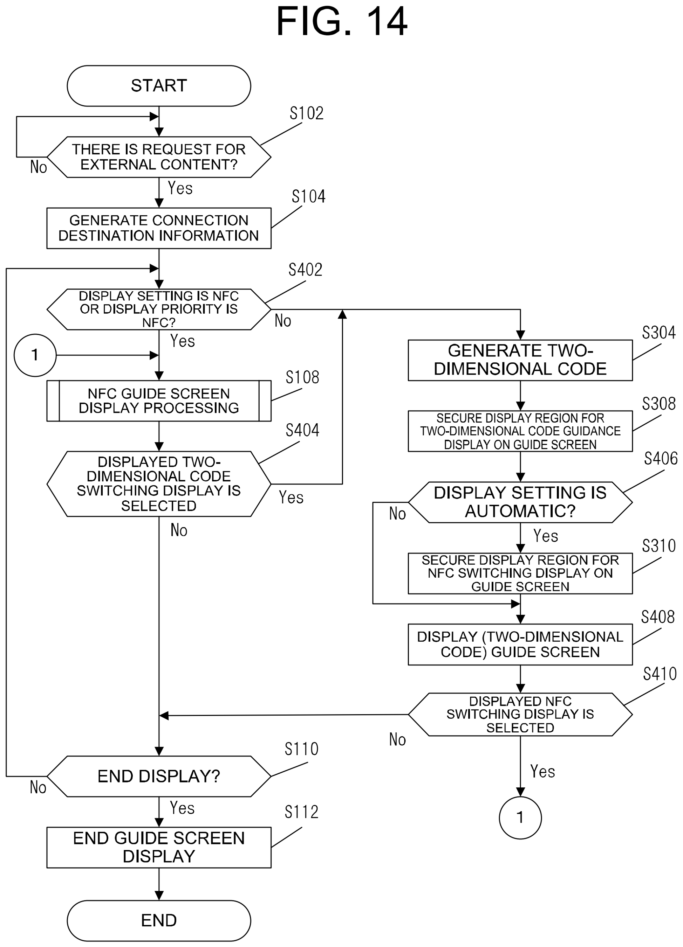

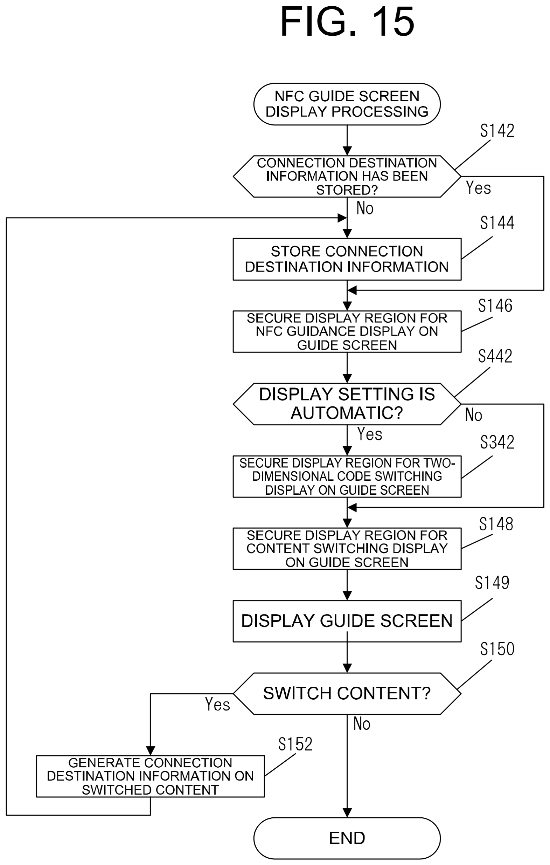

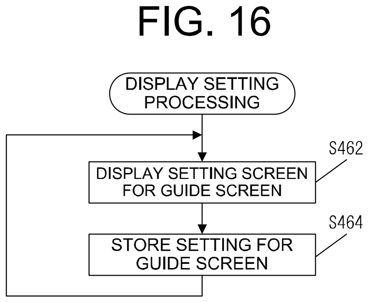

Processing flows in the present embodiment will be described below with reference to FIG. 14, FIG. 15, and FIG. 16. FIG. 14 is a diagram illustrating a flow of main processing, FIG. 15 is a diagram illustrating a flow of NFC guide screen display processing, and FIG. 16 is a diagram illustrating a flow of display setting processing.

### 4. 2. 1 Flow of main processing

FIG. 14 replaces FIG. 11 of the third embodiment, in which a step S402 is executed between the steps S104 and S108, a step S404 is executed after the step S108, a step S406 is executed after the step S308, and steps S408 and S410 are executed after the step S310.

The controller 100 determines whether or not the value of the display setting of the setting information is NFC, or whether or not the display priority is NFC (S402). In a case where the value of the display setting is "NFC" or the value of the display setting is "automatic," and the value of the display priority is "NFC," the controller 100 determines that the value of the display setting of the setting information is NFC or the display priority is NFC, and executes the NFC guide screen display processing (S402; Yes → S108).

On the other hand, in a case where the value of the display setting is "QR code" or the value of the display setting is "automatic," and the value of the display priority is "QR code," the controller 100 determines that the value of the display setting of the setting information is NFC or the display priority is not NFC, and generates a two dimensional code based on the connection destination information (S402; No → S304).

After executing the NFC guide screen display processing, the controller 100 determines whether or not the two dimensional code switching display being displayed on the guide screen is selected (S404). When the two dimensional code switching display is displayed and the two dimensional code switching display is selected, the controller 100 generates a two dimensional code (S404; Yes → S304). On the other hand, in a case where the two dimensional code switching display is not displayed on the guide screen or in a case where the user does not select the two dimensional code switching display, the controller 100 determines whether or not to end the display (S404; No → S110).

Further, the controller 100 determines whether or not the display setting is "automatic" after executing processing to secure the display region for the two dimensional code guidance display on the guide screen (S406). In a case where the value of the display setting is "automatic," the controller 100 secures the display region for the NFC switching display on the guide screen (S406; Yes → S310).

On the other hand, in a case where the value of the display setting is not "automatic," the controller 100 displays, on the display 140, the guide screen on which the display region for the two dimensional code guidance display is secured (S406; No → S408). In addition, the controller 100 displays, on the display 140, the guide screen on which the display region for the two dimensional code guidance display is secured even after the processing in the step S310 is executed (S408).

Here, the processing in the step S408 is processing to display a guide screen on which a region in which the guidance display and the switching display can be displayed is secured, similarly to the step S149. When the guide screen is displayed on the display 140, the guidance display on which the display region is secured by the processing in the step S308 and the switching display on which the display region is secured by the processing in the step S310 may not be updated and displayed in each process, but may be updated and displayed collectively in the processing in the step S408.

Next, the controller 100 determines whether or not the NFC switching display being displayed on the guide screen is selected (S410). When the NFC switching display is not displayed on the guide screen or when the NFC switching display being displayed on the guide screen is not selected by the user, the controller 100 determines whether or not to end the display (S410; No → S110). On the other hand, when the NFC switching display being displayed on the guide screen is selected, the controller 100 executes the NFC guide screen display processing (S410; Yes → S108).

### 4. 2. 2 Flow of NFC guide screen display processing

FIG. 15 provides an addition to FIG. 10 of the third embodiment, and a step S442 is executed between the steps S146 and S342.

After executing the processing to secure the display region for the NFC guidance display on the guide screen, the controller 100 determines whether or not the display setting is "automatic" (S442). When the value of the display setting is "automatic," the controller 100 secures the display region for the two dimensional code switching display on the guide screen (S442; Yes → S342). On the other hand, when the value of the display setting is not "automatic," the controller 100 secures the display region for the content switching display on the guide screen (S442; No → S148).

### 4. 2. 3 Flow of display setting processing

First, the controller 100 displays a setting screen (guide screen setting screen) for making settings related to display of the guide screen (S462). Here, as the guide screen setting screen, the controller 100 may display, on the display 140, for example, a display screen on which the user can select and set the display setting and the display priority.

Next, the controller 100 stores the values of the display setting and display priority selected by the user on the guide screen setting screen as corresponding values in the setting information storage region 1120 (S464).

### 4. 3 Operation example

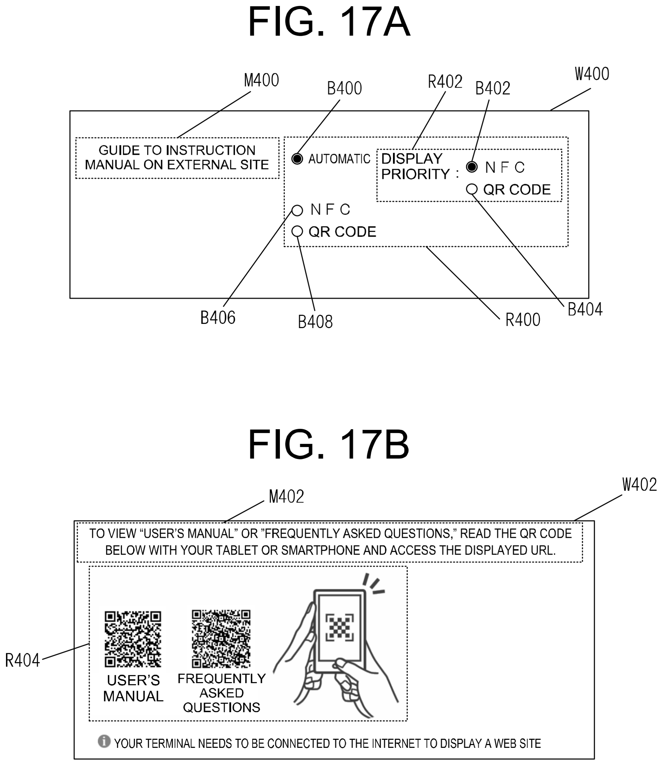

FIG. 17A and FIG. 17B are diagrams illustrating an example of an operation of the image forming apparatus 10 in the present embodiment. FIG. 17A is a diagram illustrating the operation of the guide screen setting screen displayed on the display 140 of the image forming apparatus 10. FIG. 17B is a diagram illustrating an operation of the guide screen including two dimensional code guidance display displayed on the display 140 of the image forming apparatus 10 when the value of the display setting is "QR code."

On a display screen W400 of FIG. 17A, a message M400 indicating "guide to external site" is displayed. Further, a display setting selection region R400 for selecting a display setting is secured on the display screen W400.

Here, in the display setting selection region R400, a display button B400 for selecting "automatic" as the display setting, a display button B406 for selecting "NFC" as the display setting, and a display button B408 for selecting "QR code" as the display setting are displayed.

Further, a display priority selection region R402 for selecting the display priority is secured in the display setting selection region R400. Here, in the display priority selection region R402, a display button B402 for selecting "NFC" as the display priority and a display button B404 for selecting "QR code" as the display priority are displayed.

In the present embodiment, the display buttons on the setting screen display the options of "automatic," "NFC," and "QR code" as radio buttons. However, the options may be displayed as icons for selection. In addition, in a case where "NFC" or "QR code" other than "automatic" is selected by the user as the value of the display setting, the controller 100 may dim (grayed-out display) the options related to the display priority to disable selection.

Here, when the user selects "automatic" as the display setting, the controller 100 may cancel the dimmed display (grayed-out display), switch the display priority to be selectable, and select one of the options "NFC" and "QR code." The guide screen setting screen may be displayed so as to be settable only by an administrator.

When the user selects a display setting and display priority in the display setting selection region R400 on the display screen W400, the guide screen is displayed as follows.

As a first pattern, a pattern in which a display setting for preferentially displaying the NFC guidance display is displayed is shown. First, on the setting screen, the user selects the display button B400 for selecting automatic and selects the display button B402 for selecting NFC. Next, when the user finishes the setting and selects, for example, the display button B100 for instructing the display of the first external content on the display screen W100 of FIG. 6A, the controller 100 displays the display screen W300 of FIG. 12A. Here, the NFC guidance display (R300) and the second switching display (B302) for switching, to the QR code, the guide to the external content are displayed on the display screen W300.

As a second pattern, a pattern in which the display setting for preferentially displaying the two dimensional code guidance display is displayed is shown. First, on the setting screen, the user selects the display button B400 for selecting automatic and selects the display button B404 for selecting the QR code. Next, when the user finishes the setting and selects, for example, the display button B100 for instructing the display of the first external content on the display screen W100 of FIG. 6A, the controller 100 displays the display screen W302 of FIG. 12B. Here, the two dimensional code guidance display (R302) and the second switching display (B304) switching the guide to the external content to the NFC are displayed on the display screen W302.

As a third pattern, a pattern in which the display setting for displaying the guide screen is selected with the guide to the external content fixed to the NFC is shown. First, on the setting screen, the user selects the display button B406 for selecting NFC. Next, when the user finishes the setting and selects, for example, the display button B100 for instructing the display of the first external content on the display screen W100 of FIG. 6A, the controller 100 displays the display screen W102 of FIG. 6B. Here, the NFC guidance display (R100) is displayed on the display screen W102, and the second switching display switching the guide to the external content to the QR code is not displayed and the display is suppressed.

As a fourth pattern, a pattern in which the display setting for displaying the guide screen is selected with the guide to the external content fixed to the QR code is shown. First, on the setting screen, the user selects the display button B408 for selecting the QR code. Next, when the user finishes the setting and selects, for example, the display button B100 for instructing the display of the first external content on the display screen W100 of FIG. 6A, the controller 100 displays a display screen W402 of FIG. 17B.

On the display screen W402 of FIG. 17B, a message M402 indicating that "to view "User's manual" or "frequently asked questions," read the QR code below with your tablet or smartphone and access the displayed URL" is displayed. Further, a two dimensional code guidance display R404 is displayed on the display screen W402. In the two dimensional code guidance display R404, a QR code as a two dimensional code for accessing the first external content and the second external content, and guidance for reading the QR code and displaying the external content are displayed.

When the user reads the QR code displayed on the display screen W402 with the terminal device 20, the connection destination information on the external content is read into the terminal device 20. Here, the two dimensional code guidance display (R404) is displayed on the display screen W402, and the second switching display switching the guide to NFC is not displayed and the display is suppressed.

As described above, when the user selects "QR code" on the setting screen, a guide screen fixed for "QR code" can be displayed. On the other hand, when "NFC" is selected on the setting screen, a guide screen fixed for "NFC" can be displayed.

In addition, when "automatic" is selected as the guide to a manual on an external site, it is possible to set the display priority indicating whether "QR code" or "NFC" is to be prioritized. Here, in a case where "NFC" is prioritized, a guide screen including a switching button for switching to a QR code and including display for prompting an operation of holding the terminal device over NFC is displayed. On the other hand, when "QR code" is prioritized, a guide screen including a switching button for switching to NFC and a QR code readable by the terminal device is displayed.

When "automatic" is selected, the guide (QR code or NFC) that the user wants to preferentially use is automatically selected, and the user can access the external content.

### 5. Modifications

The present disclosure is not limited to any of the embodiments described above, and various modifications may be made.

That is, the technical scope of the present disclosure also includes such embodiments that can be obtained by combining technical measures that are modified as appropriate within a range not departing from the gist of the present disclosure.

Furthermore, although the above-described embodiments are individually described for convenience of explanation, the embodiments may be executed in combination within a possible range. Moreover, the applicant intends to acquire rights to any modes of the technology described in the specification through amendments, divisional applications, or the like.

Furthermore, programs that run on each device in each embodiment control the CPU and the like (programs that cause a computer to function) so as to achieve the functions of the above-mentioned embodiments. Moreover, information handled by these devices is temporarily stored in a temporary storage device (for example, a RAM) when being processed, and then stored in various storage devices, such as a ROM and an HDD, where the information is read, corrected, and written by the CPU as needed.

Here, a recording medium for storing the programs may be any of a semiconductor medium (e.g., a ROM, a non-volatile memory card, etc.), an optical recording medium/magnetooptical recording medium (e.g., a Digital Versatile Disc (DVD), a Compact Disc (CD), a Blu-ray (registered trademark) (BD) Disc, etc.), a magnetic recording medium (e.g., a magnetic tape, a flexible disc, etc.), and the like.

For market distribution, the programs may be stored and distributed in a portable recording medium or transferred to a server computer connected via a network such as the Internet. In this case, of course, a storage device in a server apparatus is also included in the present disclosure.

Furthermore, the data described above may not be stored in the device, but may be stored in an external device and called as appropriate. For example, the data may be stored in a Network Attached Storage (NAS) or on the cloud.

Note that the scope of the present disclosure is not limited to the configurations explicitly described in the present specification, and includes any combination of the techniques disclosed in the present specification. In the present disclosure, the configurations to be patented are described in the appended claims. However, it is not intended to exclude configurations from the technical scope on the grounds that the configurations are not described in the claims.

In the present specification, the description including the term "in a/the case of/where" or "when" describes an example, and the configuration is not limited to the described content. A configuration other than the configuration described with the term "in a/the case of/where" or "when" is also disclosed within the scope obvious to those skilled in the art, and it is intended to acquire the right to such a configuration.

The process order and data flow order described in the present specification are not limited to the described orders. For example, a configuration obtained by removing part of the process or switching the order is also disclosed, and it is intended to acquire the right to such a configuration.

The functions described in the embodiments are described as being performed by the corresponding devices, but they may be realized by a single device or even by using an external server.

Moreover, each functional block or various features of the device used in the embodiments described above may be implemented in or executed by an electric circuit, such as a single integrated circuit or a plurality of integrated circuits. The electrical circuit that is designed to execute the functions described in the present specification may include a general-purpose processor, a digital signal processor (DSP), an application-specific integrated circuit (ASIC), a field programmable gate array (FPGA) or other programmable logic devices, a discrete gate or transistor logic, a discrete hardware component, or any combination thereof. A general-purpose processor may be a microprocessor or a conventional processor, controller, microcontroller, or state machine. The above-described electric circuit may be configured by a digital circuit or an analog circuit. Furthermore, when an integrated circuit technology that replaces the current integrated circuits appears due to the progress of the semiconductor technology, one or more aspects of the present disclosure can use a new integrated circuit according to the technology.

### REFERENCE SIGNS LIST

10 Image forming apparatus
20 Terminal Device
100 Controller
110 Storage section
112 Storage
114 ROM
116 RAM
140 Display
150 Operation acceptor
160 Image former
165 Image reader
170 Communicator
180 Near field communicator

## Claims

1. An information processing apparatus (10) comprising:
a near field communicator (180) that communicates with a terminal device (20);
a display (140) that displays a guide screen guiding the terminal device (20) to external content; and
one or more controllers (100), wherein
the one or more controllers (100) display the guide screen including a first guidance display displaying guidance to use the near field communicator (180) as a guide that guides the terminal device (20) to the external content, and a first switching display switching the external content.

2. The information processing apparatus (10) according to claim 1, further comprising:
a storage (110) that stores connection destination information on the external content, wherein
the one or more controllers (100)
display an external content selection screen on the display (140),
store the connection destination information corresponding to the selected external content in the storage (110), and
display the guide screen in which the external content is switched based on the connection destination information.

3. The information processing apparatus (10) according to claim 1, further comprising:
a two dimensional code generator (1020) that generates a two dimensional code, wherein
the one or more controllers (100)
further display a second switching display switching the guide on the guide screen, and
display a second guidance display displaying guidance to use the two dimensional code as the guide that guides the terminal device (20) to the external content on the guide screen when the second switching display is selected.

4. The information processing apparatus (10) according to claim 1, further comprising:
a two dimensional code generator (1020) that generates a two dimensional code; and
the storage (110) that stores a first setting that sets whether to use the near field communicator (180) or to use the two dimensional code as the guide that guides the terminal device (20) to the external content, wherein
the one or more controllers (100)
display the first guidance display on the guide screen in a case where a setting to use the near field communicator (180) is made in the first setting, and
display the second guidance display displaying guidance to use the two dimensional code on the guide screen in a case where a setting to use the two dimensional code is made in the first setting.

5. The information processing apparatus (10) according to claim 3, wherein
the storage (110) further stores a second setting that sets whether to preferentially use the near field communicator (180) or to preferentially use the two dimensional code as the guide that guides the terminal device (20) to the external content, and
the one or more controllers (100)
display, on the guide screen, the first guidance display and the second switching display switching the guide in a case where a setting to preferentially use the near field communicator (180) is made in the second setting, and
display, on the guide screen, the second guidance display and the second switching display in a case where a setting to preferentially use the two dimensional code is made in the second setting.

6. A display method, comprising:
displaying, on a guide screen guiding a terminal device (20) to external content, a first guidance display indicating that communicating with the terminal device by use of a near field communication as a guide guiding to the external content, and a first switching display switching the external content.
